## Europäisches Patentamt

## European Patent Office

## Office européen des brevets

(11) Veröffentlichungsnummer: **0 074 346**

**A2**

(12) **EUROPÄISCHE PATENTANMELDUNG**

(21) Anmeldenummer: **82890115.7**

(22) Anmeldetag: **05.08.82**

(51) Int. Cl.³: **B 29 C 29/00**

(30) Priorität: **09.09.81 AT 3893/81**

(43) Veröffentlichungstag der Anmeldung:
**16.03.83 Patentblatt 83/11**

(84) Benannte Vertragsstaaten:
**BE CH DE FR GB IT LI LU NL SE**

(71) Anmelder: **Österreichische Schiffswerften
Aktiengesellschaft Linz-Korneuburg
Hafenstrasse 61
A-4010 Linz(AT)**

(72) Erfinder: **Schulz, Helmuth
Enzing 19
A-4490 St. FLorian(AT)**

(72) Erfinder: **Bacher, Helmut
Industriezeile 2
A-4020 Linz(AT)**

(74) Vertreter: **Wolfram, Gustav, Dipl.-Ing.
Schwindgasse 7 P.O. Box 205
A-1041 Wien(AT)**

(54) **Verfahren und Anlage zum Zerkleinern und Reinigen von Kunststoffabfällen, insbesondere von Kunststoffolien.**

(57) Bei dem Verfahren werden nach einem Waschprozeß Schwerstoffe und Waschwasser abgetrennt, wofür bei der Anlage eine Waschvorrichtung (2) und ein Schwerstoffabscheider (3) mit einer letzterem nachgeordneten Waschwasser-Trennvorrichtung (4) vorgesehen sind.

Um Kunststoffabfälle mit hohem Reinigungsgrad bei gleichzeitig langer Standzeit, insbesondere der in der Anlage eingesetzten Schneidwerkzeuge (16), zu zerkleinern und örtliche Überdehnungen der Kunststoffabfälle, welche durch abgenützte Schneidwerkzeuge verursacht werden, zu vermeiden, werden die Abfälle zunächst vorzerkleinert, gewaschen und nach der Schwerstoffabscheidung vom Waschwasser getrennt, bevor sie auf die gewünschte Stückgröße zerkleinert werden. Die Zerkleinerungseinrichtung der Anlage besteht aus einem Vorzerkleinerer (1a) und einem zumindest einstufigen Hauptzerkleinerer (1b), wobei zwischen dem Vorzerkleinerer (1a) und dem Hauptzerkleinerer (1b) die Waschvorrichtung (2), der Schwerstoffabscheider (3) und die Trennvorrichtung (4) für das Waschwasser vorgesehen sind.

*FIG.1*

EP 0 074 346 A2

Verfahren und Anlage zum Zerkleinern und Reinigen von Kunststoffabfällen, insbesondere von Kunststoffolien

Die Erfindung bezieht sich auf ein Verfahren zum Zerkleinern und Reinigen von Kunststoffabfällen, insbesondere von Kunststoffolien, wobei nach einem Waschen Schwerstoffe und Waschwasser abgeschieden werden, und auf eine Anlage zur Durchführung des Verfahrens.

Um ein möglichst einfaches Verfahren zum Zerkleinern und Reinigen von Kunststoffabfällen sicherzustellen, ist es bekannt (AT-PS 343 445), den Waschvorgang während der Zerkleinerung der Kunststoffabfälle durchzuführen, weil die üblicherweise für das Zerkleinern vorgesehenen, rotierenden Schneidwerkzeuge für eine entsprechende Bewegung der Kunststoffabfälle im Waschwasser sorgen. Es hat sich allerdings herausgestellt, daß die von den Kunststoffabfällen abgelösten Schmutzteile im Zusammenwirken mit dem Waschwasser gewissermaßen eine Schleifpaste bilden, die zu einer starken Abnützung der Schneidwerkzeuge führt, so daß die Standzeit dieser Werkzeuge wesentlich herabgesetzt wird. Mit der zunehmenden Abnützung der Schneidwerkzeuge wird naturgemäß die Schneidwirkung vermindert und der Reißeffekt erhöht, was starke örtliche Dehnungen der Kunststoffabfälle und damit Taschenbildungen mit sich bringt. Diese Taschenbildung erschwert das Ablösen von Schmutzteilchen im Bereich dieser Taschen erheblich. Es wird folglich durch die Abnützung der Schneidwerkzeuge nicht

0074346

nur die Zerkleinerungswirkung, sondern auch die Reinigungswirkung beeinträchtigt.

Der Erfindung liegt somit die Aufgabe zugrunde, diese Mängel zu vermeiden und ein Verfahren zum Zerkleinern und Reinigen von Kunststoffabfällen anzugeben, das neben einer vorteilhaften Schneidleistung einen günstigen Reinigungsgrad gewährleistet und eine hohe Standzeit für die zum Einsatz kommenden Werkzeuge sicherstellt.

Die Erfindung löst die gestellte Aufgabe dadurch, daß die Kunststoffabfälle zunächst vorzerkleinert, gewaschen und nach der Schwerstoffabscheidung vom Waschwasser getrennt werden, bevor sie auf die gewünschte Stückgröße zerkleinert werden.

Da der Zerkleinerungsvorgang in eine Vorzerkleinerung und in eine Hauptzerkleinerung aufgeteilt wird, können für diese Zerkleinerungsstufen unterschiedliche Bedingungen gewählt werden, die den jeweiligen Verhältnissen bei der Vor- und Hauptzerkleinerung vorteilhaft angepaßt sind. So werden beispielsweise an die Vorzerkleinerung keine besonderen Anforderungen bezüglich der Schnittqualität gestellt, was eine gegenüber der Hauptzerkleinerung wesentlich höhere Abnützung der Schneidwerkzeuge und damit eine größere Standzeit erlaubt. In diesem Zusammenhang ist auch zu bedenken, daß für eine Grobzerkleinerung die Verweilzeit der Kunststoffabfälle in einer Zerkleinerungseinrichtung kurz ist. Selbst bei einer Zuführung der Kunststoffabfälle mit Waschwasser kann demnach ein während der Grobzerkleinerung stattfindender Waschvorgang nicht alle Schmutzteile von den Kunststoffabfällen lösen, so daß die Abnützung der Schneidwerkzeuge durch die abgelösten Schmutzstoffteile vergleichsweise gering bleibt. Wird die Grobzerkleinerung der Kunststoffabfälle trocken vorgenommen, so entfällt eine diesbezügliche Werkzeugabnützung überhaupt.

Wegen der vorgenommenen Grobzerkleinerung ist der anschließende Waschvorgang der Kunststoffabfälle mit vergleichsweise geringem Aufwand durchführbar, wobei die abgelösten Schmutzteilchen ohne Einfluß auf die Standzeit der Schneidwerkzeuge für die Hauptzerkleinerung bleiben, weil die gelösten Schmutzteile vor der nachfolgenden Zerkleinerung abgeschieden werden. Die Standzeit der Schneidwerkzeuge für die Hauptzerkleinerung ist dementsprechend groß. Auf Grund der vorangegangenen Abscheidung des Waschwassers kann außerdem die Zerkleinerung der vorzerkleinerten Kunststoffabfälle mit einem geringen Energieaufwand vorgenommen werden. Durch das Waschen der vorzerkleinerten Kunststoffabfälle kann somit eine hohe Standzeit der im Einsatz befindlichen Schneidwerkzeuge auch für die Hauptzerkleinerung gewährleistet werden.

Ausgehend von einer Anlage mit einer Zerkleinerungseinrichtung, einer Waschvorrichtung und einem Schwerstoffabscheider, dem eine Trennvorrichtung für das Waschwasser nachgeordnet ist, wird zur Durchführung des erfindungsgemäßen Verfahrens vorgeschlagen, daß die Zerkleinerungseinrichtung aus einem Vorzerkleinerer und einem zumindest einstufigen Hauptzerkleinerer besteht und daß zwischen dem Vorzerkleinerer und dem Hauptzerkleinerer die Waschvorrichtung, der Schwerstoffabscheider und die Trennvorrichtung für das Waschwasser vorgesehen sind. Diese Anordnung hat gegenüber bekannten Anlagen, bei denen die Wasch- und Zerkleinerungsvorrichtung in einer Zerkleinerungseinrichtung zusammengefaßt sind, den Vorteil, daß dem Hauptzerkleinerer die vorzerkleinerten Kunststoffabfälle gereinigt und vom Waschwasser getrennt zugeführt werden, so daß die Abnützung der Schneidwerkzeuge des Hauptzerkleinerers lediglich von der Beschaffenheit der Kunststoffabfälle selbst und nicht maßgebend von deren Verschmutzung abhängt. Damit kann die Standzeit dieser Schneidwerkzeuge entscheidend verbessert werden, zumal auch bei einer stärkeren Abnützung der Schneidwerkzeuge und der damit verbundenen Zunahme der Reißwirkung keine Rücksicht auf die reinigungshemmende Wirkung von sich bildenden Taschen u.dgl. genommen werden muß. Der geringfügige Mehraufwand durch eine gesonderte Waschvorrichtung wird dadurch mehr als wettgemacht, wobei die Waschvorrichtung durch eine Dickstoffpumpe verwirklicht werden kann, die für den Guttransport ohnehin vorzusehen ist.

Die Stückgröße der zerkleinerten Kunststoffabfälle wird bei bekannten Zerkleinerern durch Siebe festgelegt, die jedoch den Nachteil haben, daß sich diese Siebe verlegen. Dieser Nachteil wird bei einer anderen bekannten Zerkleinerungseinrichtung (DE-OS 26 46 077) vermieden, die einen den Boden eines Behälters bildenden, antreibbaren Teller aufweist, der mit Gegenwerkzeugen an der Behälterwand zusammenwirkende Schneidwerkzeuge trägt, wobei zwischen der Behälterwand und dem Teller ein Ringspalt für den Durchtritt des Zerkleinerungsgutes vorhanden ist. Durch diesen Ringspalt kann das zerkleinerte Gut aus dem Zerkleinerungsbehälter austreten, wobei allerdings die Stückgröße stark variieren kann, weil einerseits die Schneidwerkzeuge mit Abstand oberhalb des Tellers angeordnet sind und folglich die von den Schneidwerkzeugen erfaßten Kunststoffabfälle nicht zwangsläufig durch den Ringspalt gefördert werden und anderseits der Ringspalt selbst den Durchtritt vergleichsweise großer Stücke zuläßt. Da die Verweilzeit des Zerkleinerungsgutes sowohl im Vorzerkleinerer als auch im Hauptzerkleinerer die Standzeit der Schneidwerkzeuge mitbestimmt, ist für die erfindungsgemäße Zerkleinerung in einer Vor- und einer Hauptstufe ein rascher Durchsatz durch den Vor- und Hauptzerkleinerer anzustreben. Es wird deshalb vorgeschlagen, von einem sieblosen Zerkleinerer mit einem Ringspalt für den Gutdurchsatz auszugehen und dafür Sorge zu tragen, daß die gewünschte Stückgröße in vergleichsweise engen Grenzen festgelegt wird. Dies wird dadurch erreicht, daß beim Vorzerkleinerer und beim Hauptzerkleinerer der Ringspalt durch die in den Ringspalt ragenden Gegenwerkzeuge in mehrere die Stückgröße des Zerkleinerungsgutes bestimmende Durchtrittsöffnungen unterteilt ist. Diese Ausbildung hat den Vorteil, daß die von den Schneidwerkzeugen erfaßten und vom erfaßten Gut abgetrennten Teile zwangsläufig durch die Durchtrittsöffnungen hindurchgefördert werden, wenn die Größe dieser Durchtrittsöffnungen einen solchen Durchtritt zuläßt, was aber stets der Fall ist, weil nur in die Durchtrittsöffnungen ragende Teile des Zerkleinerungsgutes von den Schneidwerkzeugen abgetrennt werden. Das Zuführen der Kunststoffabfälle zu den Schneidwerkzeugen und zu den Durchtrittsöffnungen kann durch entsprechend geneigt angeordnete Gegenwerkzeuge unterstützt werden, die das Zerkleinerungsgut gegen den Teller hin führen.

Reicht für die Hauptzerkleinerung ein Schneidvorgang nicht aus, so kann der Hauptzerkleinerer
wenigstens zwei mit Abstand übereinander liegende
Teller aufweisen, wobei die Größe der Durchtrittsöffnungen für das Zerkleinerungsgut von Teller zu Teller
abnimmt.

In der Zeichnung ist der Erfindungsgegenstand,
wie er zur Durchführung des erfindungsgemäßen Verfahrens zum Zerkleinern und Reinigen von Kunststoffabfällen besonders geeignet ist, vereinfacht dargestellt.
Es zeigen:

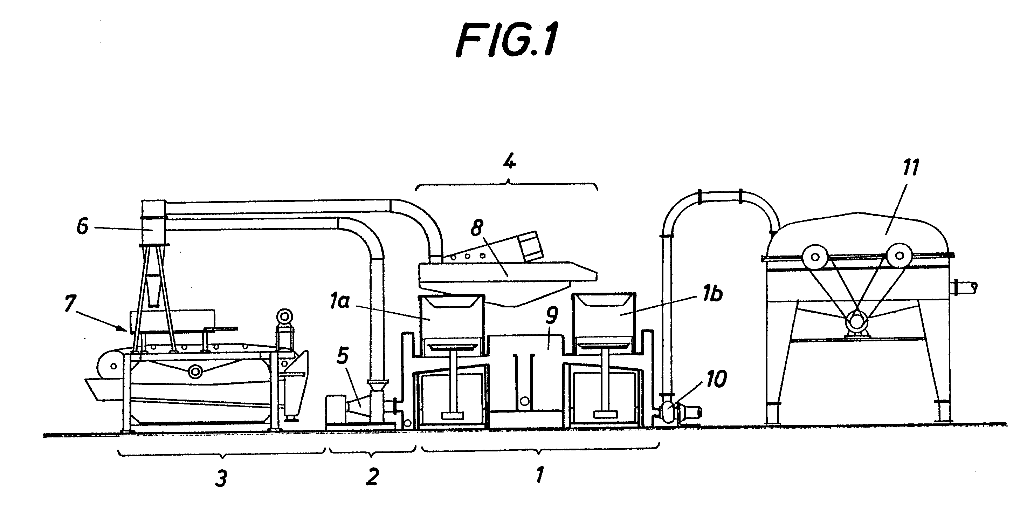

Fig. 1 eine erfindungsgemäße Anlage zum Zerkleinern
und Reinigen von Kunststoffabfällen in einer
schematischen, teilweise aufgerissenen Seitenansicht,

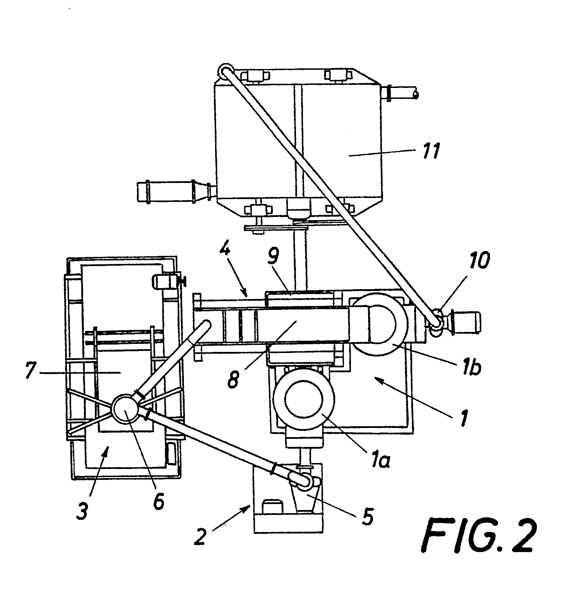

Fig. 2 eine Draufsicht auf eine erfindungsgemäße Anlage und

Fig. 3 einen Vor- bzw. Hauptzerkleinerer in einem
Vertikalschnitt.

Die dargestellte Anlage zum Zerkleinern und Reinigen von Kunststoffabfällen, insbesondere von Kunststoffolien, besteht im wesentlichen aus einer Zerkleinerungseinrichtung 1, einer Waschvorrichtung 2
und einem Schwerstoffabscheider 3, dem eine Trennvorrichtung 4 für das Waschwasser nachgeordnet ist. Der
wesentliche Unterschied dieser Anlage gegenüber bekannten Anlagen dieser Art ist darin zu sehen, daß
die Zerkleinerungseinrichtung 1 aus einem Vorzerkleinerer
1a und einem Hauptzerkleinerer 1b besteht, wobei hinsichtlich des Gutdurchsatzes zwischen dem Vorzerkleinerer
1a und dem Hauptzerkleinerer 1b die im wesentlichen
aus einer Dickstoffpumpe 5 bestehende Waschvorrichtung
2, der einen Hydrozyklon 6 mit nachgeordneter Siebanlage 7 aufweisende Schwerstoffabscheider 3 und die aus einem Schwingsieb 8 oder aus einer Zentrifuge gebildete Trennvorrichtung 4 für das Waschwasser zwischengeschaltet sind. Demzufolge wird das im Vorzerkleinerer 1a grob zerkleinerte Kunststoffgut erst nach der Zerkleinerung gewaschen und vom abgelösten Schmutz befreit, bevor es nach einer Waschwasserabscheidung dem Hauptzerkleinerer 1b zugeführt wird, in dem das vorzerkleinerte und gereinigte Gut auf die gewünschte Stückgröße zerkleinert wird. Diese Vorreinigung der grob zerkleinerten Kunststoffabfälle bewirkt eine hohe Standzeit der Schneidwerkzeuge des Hauptzerkleinerers 1b, weil der Verschleiß durch Verunreinigungen, die zusammen mit dem Waschwasser ähnlich einer Schleifpaste wirken, völlig entfällt. Die geringe Verweilzeit des Zerkleinerungsgutes im Vorzerkleinerer 1a stellt auch für die Schneidwerkzeuge des Vorzerkleinerers 1a eine hohe Standzeit sicher, zumal ein Ablösen der Verunreinigungen von den Kunststoffabfällen wegen des Fehlens von Waschwasser im Vorzerkleinerer 1a nicht erfolgt. Die im Vorzerkleinerer 1a zerkleinerten und aus dem Vorzerkleinerer 1a austretenden Gutteile werden erst mit dem aus einem Vorratsbehälter 9 zugeführten Waschwasser der Waschvorrichtung 2 zugeführt, deren Ausbildung als Dickstoffpumpe 5 nicht nur für eine ausreichende Bewegung der Gutteile im Waschwasser, sondern auch für den Guttransport sorgt. Die in dieser Weise von den Verunreinigungen gelösten Gutteile werden zusammen mit den Verunreinigungen im Waschwasserstrom dem Hydrozyklon 6 zugeführt, wo eine Abscheidung der Schwerstoffe erfolgt, die nach ihrem Abscheiden gesiebt und abgelagert werden. Allenfalls noch vorhandene Verunreinigungen können mit dem Waschwasser im Schwingsieb 8 abgeschieden werden, das das nunmehr gereinigte und vorzerkleinerte Gut dem Hauptzerkleinerer 1b übergibt. Das im Schwingsieb 8 abgetrennte Waschwasser wird dem Vorratsbehälter 9 für das Waschwasser zugeleitet, das dementsprechend zum Teil im Kreis geführt ist.

Der Weitertransport des im Hauptzerkleinerer 1b auf die gewünschte Stückgröße zerkleinerten Kunststoffgutes erfolgt in gleicher Weise mit Hilfe eines aus dem Vorratsbehälter 9 stammenden Wasserstromes, der über eine Pumpe 10 einem Trockner 11 für das Gut zugefördert wird, in dem das Transportwasser abgeschieden und die zerkleinerten Kunststoffabfälle getrocknet werden, bevor diese Kunststoffabfälle in einem Speicherbehälter für die Weiterverarbeitung gesammelt werden. Das im Trockner 11 abgeschiedene Transportwasser kann wieder dem Vorratsbehälter 9 zugeführt werden, dessen Füllhöhe geregelt wird, um den Abtransport des Zerkleinerungsgutes von den Zerkleinerern 1a und 1b sicherzustellen.

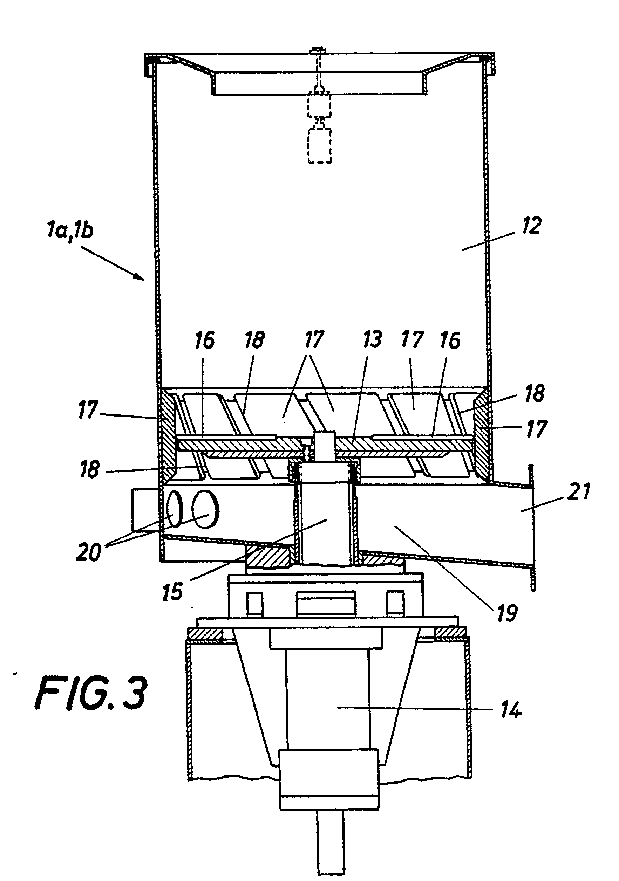

Zur Erzielung einer hohen Standzeit für die Zerkleinerungswerkzeuge ist es wichtig, die Verweilzeit des Zerkleinerungsgutes in den Zerkleinerern 1a und 1b auf das notwendige Mindestmaß zu beschränken. Dies kann in vorteilhafter Weise dadurch sichergestellt werden, daß für eine einfache und störungsunanfällige Gutaustragung vorgesorgt wird. Zu diesem Zweck wird gemäß Fig. 3 der Boden des das Zerkleinerungsgut aufnehmenden Behälters 12 der Zerkleinerer 1a und 1b von einem Teller 13 gebildet, der über eine von einem Motor 14 angetriebene Welle 15 angetrieben wird und Schneidwerkzeuge 16 trägt, die mit Gegenwerkzeugen 17 an der Behälterwand zusammenwirken. Die Anordnung ist dabei so getroffen, daß der sich zwischen dem Teller 13 und der Behälterwand ergebende Ringspalt durch die in diesen Ringspalt ragenden Gegenwerkzeuge 17 in mehrere voneinander getrennte Durchtrittsöffnungen für das Zerkleinerungsgut unterteilt wird. Mit den durch diese Maßnahme erhaltenen Durchtrittsöffnungen kann in einfacher Weise die Stückgröße des Zerkleinerungsgutes bestimmt werden, ohne daß die Gefahr einer Verstopfung der Durchtrittsöffnungen vorhanden wäre, weil durch den drehenden Teller 13 stets für eine Selbstreinigung gesorgt wird. Der gegen die Drehrichtung geneigte Verlauf der die Durchtrittsöffnungen begrenzenden Kanten 18 der Gegenwerkzeuge 17 erzwingt das Zu- und Abführen der Gutteile im Zusammenwirken mit dem rotierenden Teller 13 und den Schneidwerkzeugen 16. Das zu zerkleinernde Kunststoffgut wird über die geneigten Kanten der Gegenwerkzeuge 17 bei der Mitnahme durch den Teller 13 gegen die Durchtrittsöffnungen geführt, wobei es von den Schneidwerkzeugen erfaßt und zerkleinert wird. Die abgetrennten Teile werden durch die Durchtrittsöffnungen im Ringspalt zwischen dem Teller 13 und der Behälterwand in einen Sammelraum 19 unterhalb des Tellers 13 hindurchgedrückt, der über Anschlußöffnungen 20 an den Vorratsbehälter 9 und über einen Stutzen 21 an die nachgeordnete Pumpe 5 oder 10 angeschlossen ist, so daß das zerkleinerte Gut nach seinem Durchtritt durch die Durchtrittsöffnungen zwischen den Gegenwerkzeugen 17, der Behälterwand und dem Teller 13 mit dem Wasser aus dem Vorratsbehälter 9 weitergefördert werden kann.

Patentansprüche

1. Verfahren zum Zerkleinern und Reinigen von Kunststoffabfällen, insbesondere von Kunststoffolien, wobei nach einem Waschen Schwerstoffe und Waschwasser abgeschieden werden, dadurch gekennzeichnet, daß die Kunststoffabfälle zunächst vorzerkleinert, gewaschen und nach der Schwerstoffabscheidung vom Waschwasser getrennt werden, bevor sie auf die gewünschte Stückgröße zerkleinert werden.

2. Anlage zur Durchführung des Verfahrens nach Anspruch 1 mit einer Zerkleinerungseinrichtung (1), einer Waschvorrichtung (2) und einem Schwerstoffabscheider (3), dem eine Trennvorrichtung (4) für das Waschwasser nachgeordnet ist, dadurch gekennzeichnet, daß die Zerkleinerungseinrichtung (1) aus einem Vorzerkleinerer (1a) und einem zumindest einstufigen Hauptzerkleinerer (1b) besteht und daß zwischen dem Vorzerkleinerer (1a) und dem Hauptzerkleinerer (1b) die Waschvorrichtung (2), der Schwerstoffabscheider (3) und die Trennvorrichtung (4) für das Waschwasser vorgesehen sind.

3. Anlage nach Anspruch 2 mit einer Zerkleinerungseinrichtung (1), die einen den Boden eines Behälters (12) bildenden, antreibbaren Teller (13) aufweist, der mit Gegenwerkzeugen (17) an der Behälterwand zusammenwirkende Schneidwerkzeuge (16) trägt, wobei zwischen der Behälterwand und dem Teller (13) ein Ringspalt für den Durchtritt des Zerkleinerungsgutes vorhanden ist, dadurch gekennzeichnet, daß beim Vorzerkleinerer (1a) und beim Hauptzerkleinerer (1b) der Ringspalt durch die in den Ringspalt ragenden Gegenwerkzeuge (17) in mehrere die Stückgröße des Zerkleinerungsgutes bestimmende Durchtrittsöffnungen unterteilt ist.

**0074346**

4. Anlage nach Anspruch 2 und 3, dadurch gekennzeichnet, daß der Hauptzerkleinerer (1b) wenigstens zwei mit Abstand übereinanderliegende Teller (13) aufweist, wobei die Größe der Durchtrittsöffnungen für das Zerkleinerungsgut von Teller zu Teller abnimmt.

**FIG.1**

FIG.2

**FIG.3**